# EUROPÄISCHE PATENTSCHRIFT

(11) **EP 2 315 013 B1**
(45) Veröffentlichungstag und Bekanntmachung des Hinweises auf die Patenterteilung: **18.06.2014**
(21) Anmeldenummer: 09013311.7
(22) Anmeldetag: 21.10.2009
(51) Int. Cl.: G01N 27/414

(54) **Feuchtesensor**
Humidity sensor
Capteur d'humidité

(43) Veröffentlichungstag der Anmeldung: 27.04.2011
(73) Patentinhaber: Micronas GmbH, 79108 Freiburg (DE)
(72) Erfinder: Fredrichs, Heinz-Peter, Dr., 79271 St. Peter (DE)
(74) Vertreter: Koch, Bertram

(56) Entgegenhaltungen:
- EP-A2- 1 176 418
- WO-A1-2008/122390
- US-A- 4 423 371
- MARQUARDT G: "Feuchtigkeitsempfindliche Feldeffekttransistoren" WISSENSCHAFTLICHEZEITSCHRIFT DER TECHNISCHEN HOCHSCHULE KARL-MARX STADT, TECHNISCHE UNIVERSITAET CHEMNITZ, DE, Bd. 25, Nr. 6, 1. Januar 1983 (1983-01-01) , Seiten 884-887, XP009131757 ISSN: 0372-7610
- LEE S P ET AL: "Humidity sensitive field effect transistors" SENSORS AND ACTUATORS B, ELSEVIER SEQUOIA S.A., LAUSANNE, CH, Bd. 35, Nr. 1, 1. September 1996 (1996-09-01), Seiten 80-84, XP004049735 ISSN: 0925-4005 DOI: 10.1016/S0925-4005(96)02018-7

## Beschreibung

Die Erfindung betrifft einen Feuchtesensor, der auf einem Substrat mindestens einen, einen Sensorbereich aufweisenden Potentialsensor und wenigsten eine Steuerelektrode hat, die mit einer Signalquelle verbunden ist, die derart ausgestaltet ist, dass eine veränderliche Steuerspannung an die Steuerelektrode anlegbar ist, wobei auf dem Sensorbereich benachbart zu der Steuerelektrode eine feuchtigkeitsdurchlässlge Sensorschicht angeordnet ist, deren Dielektrizitätszahl von der Feuchte abhängig ist, wobei die Steuerelektrode derart zu der Sensorschicht benachbart Ist, dass das Potentialmesssignal des Potentialsensors von der Steuerspannung und der Feuchte abhängig ist, und wobei der Potentialsensor mit einer Auswerteeinrichtung zum Ermitteln der Feuchte aufgrund des Potentialmesssignals verbunden ist.

Ein derartiger Feuchtesensor ist aus EP 1 176 418 A2 bekannt. Der Feuchtesensor hat einen Halbleiterchip, in den als Potentialsensor ein Feldeffektfransitor integriert ist. Der Feldeffektiransitor weist in einem Halbleitersubstrat eine Drain und eine Source auf, zwischen denen als potenfialempfindlicher Sensorbereich ein Kanalbereich gebildet ist. Auf dem Kanalbereich ist eine gassensitive Sensorschicht angeordnet, die unabhängig von der Feuchte polarlsierbar ist und deren Dlelektrizitätszahl von der Feuchte abhängig ist. Die Sensorschicht besteht aus einem porösen, gasdurchlässigen Material. Auf der Sensorschicht ist eine Steuerelektrode angeordnet, welche ebenfalls porös und gasdurchlässig ist und die Sensorschicht sowie eine seitlich daran angrenzende Passivierungsschicht vollständig abdeckt. Zum Messung der Feuchte wird zunächst an die Steuerelektrode eine elektrische Spannung angelegt, um die von der Feuchte abhängige Änderung der relativen Dielehtrizitätszahl zu bestimmen. Anhand der gemessenen Änderung wird dann die Feuchte ermittelt. Der Feuchtesensor hat den Nachteil, dass bei seiner Fertigung nach dem Aufbringen der Sensorschicht auf den Kanalbereich ein weiterer Fertigungsschritt erforderlich wird, bei dem als Steuerelektrode eine poröse Metallisierung auf die Sensorschicht und die seitlich daran angrenzende Passivierungsschicht aufgebracht wird. Die Metallisierung muss an der Sensorschicht und der Passivierungsschicht haften bleiben. Dadurch ergeben sich bei der Auswahl der Werkstoffe für die Metallisierung und die Sensorschicht gewisse Einschränken. Ungünstig ist außerdem, dass nur poröse, gasdurchlässige Schichten als Metallisierung verwendet werden können.

Aus der WO 2008 / 122390 A1, der "Wissenschaftliche Zeitschrift der technischen Hochschule Karl-Marx Stadt Bd. 25, Nr. 6, 1. Januar 1983, Seiten 884 - 887, Marquardt G: "Feuchtigkeitsempfindliche Feldeffekttransistoren", der " Sensors and Actuators B, Bd. 35, Nr. 1, 1. September 1996, Seiten 80 - 84, Lee S P et al: "Humidity sensitive field efffect transistors" und der US 4 423 371 A sind weitere Vorrichtungen der eingangs genannten Art bekannt.

Es besteht deshalb die Aufgabe, einen Feuchtesensor der eingangs genannten Art zu schaffen, der kostengünstig herstellbar ist.

Diese Aufgabe wird durch den Feuchtesensor gemäß Anspruch 1 gelöst.

Die Steuerelektrode ist also in der senkrechten Projektion auf die Erstreckungsebene des Substrats seitlich neben der Sensorschicht und/oder unterhalb der Sensorschicht zwischen dieser und dem Substrat angeordnet, ohne die Sensorschicht zu überdecken, in vorteilhafter Weise braucht dadurch bei der Fertigung des Feuchtesensors nach dem Aufbringen der Sensorschicht auf diese keine weitere Schicht aufgebracht zu werden. Die Sensorschicht kann also als Deckschicht ausgestaltet sein, die direkt mit der den Feuchtesensor umgebenden Atmosphäre in Kontakt steht. Somit kann die Steuerelektrode auch aus einem Material bestehen, das für Feuchtigkeit nicht oder nur schlecht durchlässig ist. Dennoch ermöglicht der erfindungsgemäße Feuchtesensor bei einer Änderung der Feuchte ein schnelles Ansprechen des Feuchte-Messsignals.

Vorteilhaft ist, wenn die Steuerelektrode den Sensorbereich ringförmig umgrenzt. Dadurch kann die veränderliche Steuerspannung bzw. das veränderliche Potential besser und homogener auf die Sensorschicht einwirken, beispielsweise indem durch die Potentialänderung in der Sensorschicht befindliche Dipole ausgerichtet oder durch Ladungsverschiebung induziert werden. Diese auch von der Feuchte abhängige Ladungsverschiebung ist mit Hilfe des Potentialsensors kapazitiv detektierbar.

Gemäß der Erfindung deckt die Sensorschicht die Steuerelektrode vollständig ab. Das Potentialmesssignal des Potentialsensors ist dann weitgehend unempfindlich gegenüber von am Feuchtesensor auftretenden Verschmutzungen. Derartige Verschmutzungen können vor allem nach längerer Betriebsdauer des Feuchtesensors nur schwer vermieden werden. Außerdem kann der Feuchtesensor dann einfacher und kostengünstiger hergestellt werden.

Zwischen der Steuerelektrode und der Sensorschicht kann eine elektrische Isolationsschicht angeordnet sein. Dabei ist die Dicke der Isolationsschicht bzw. der Abstand zwischen der Steuerelektrode und der Sensorschicht so gewählt, dass das durch die Steuerspannung erzeugte elektrische Feld durch die Isolationsschicht hindurch kapazitiv auf die Sensorschicht einwirkt Diese wiederum ist kapazitiv an den Sensorbereich des Potentialsensors gekoppelt. Durch die Isolationsschicht ist das Potentialmesssignal noch unempfindlicher gegenüber Verschmutzungen an dem Feuchtesensor. Die Isolationsschicht kann eine native Isolationsschicht sein, die bei der Herstellung des Feuchtesensors durch den Kontakt der Steuerelektrode mit Luftsauerstoff entstanden ist.

Bei einer vorteilhaften Ausgestaltung der Erfindung besteht die Sensorschicht aus Polymethylmethacrylat (PMMA) oder enthält Polymethylmethacrylat Der Feuchtesensor ermöglicht dann eine besonders hohe Messempfindlichkeit

Vorteilhaft ist, wenn der Potentialsensor ein Feldeffekttransistor ist, der ein Halbleiter-Substrat eines ersten Ladungsträgertyps aufweist, auf dem eine Drain und eine Source eines zweiten Ladungströgertyps angeordnet sind, und wenn zwischen Drain und Source ein Kanalbereich vorgesehen ist, der den Sensorbereich bildet. Mit Hilfe des Feldeffekttransistors kann das veränderliche Potential hochohmig gemessen werden. Der Kanalbereich des Feldeffekttransistors ist bevorzugt direkt unterhalb der Sensorschicht angeordnet und ermöglicht dadurch eine gegen EMV-Einwirkung weitgehend unempfindliche Messsignalgewinnung sowie kompakte Abmessungen des Feuchtesensors.

Bei einer anderen Ausgestaltung der Erfindung ist der Sensorbereich durch eine vorzugsweise flächige Messelektrode gebildet, die über eine Leiterbahn mit der Gateelektode eines Feldeffekttransistors und/oder einem Eingang eines hochohmigen Messverstärkers verbunden ist. Der Kanalbereich des Feldeffekttransistors bzw. der Messverstärker kann also auch, seitlich neben dem Sensorbereich angeordnet sein.

Bei einer bevorzugten Ausführungsform ist die Signalquelle derart ausgestaltet, dass sie eine Steuerspannung mit mindestens einer Sprungstelle, insbesondere eine Rechteckspannung erzeugen kann. Das Potentialmesssignal des Potentialsensors kann dann auf einfache Weise In der Auswerteeinrichtung ausgewertet werden. Die Erfindung ist aber nicht auf die Verwendung einer Steuerspannung, die eine Sprungstelle aufweist, beschränkt. Grundsätzlich kann die Steuerspannung einen beliebigen, von einem Gleichspannungssignal abweichenden Signalverlauf haben. In der Auswerteeinrichtung muss dann der Einfluss, den der Signalverlauf der Steuerspannung auf das Potentialmesssignal hat, entsprechend aus dem Potentialmesssignal herausgerechnet werden, beispielsweise durch Korrelation des Potentialmesssignals mit der Steuerspannung.

Vorteilhaft ist, wenn die die Signalquelle und die Auswerteeinrichtung in das Substrat integriert sind. Der Feuchtesensor ist dann noch kostengünstiger herstellbar und ermöglicht außerdem sehr kompakte Abmessungen.

Nachfolgend sind Ausführungsbeispiele der Erfindung anhand der Zeichnung näher erläutert Es zeigt
- Fig. 1: einen Querschnitt durch ein erstes Ausführungsbeispiel eines Feuchtesensors,
- Fig. 2: eine Aufsicht auf den Feuchtesensor,
- Fig. 3: eine graphische Darstellung von zwei bei unterschiedlicher relativer Feuchte aufgezeichneten Potentialmesssignalen des Feuchtesensors während des Anlegens einer Steuerspannung an eine Steuerlektrode, wobei auf der Abszisse die Zeit t und auf der Ordinate das Potentialmesssignal s bzw. die Steuerspannung dargestellt sind, und
- Fig.4: einen Querschnitt durch ein zweites Ausführungsbeispiel des Feuchtesensors.

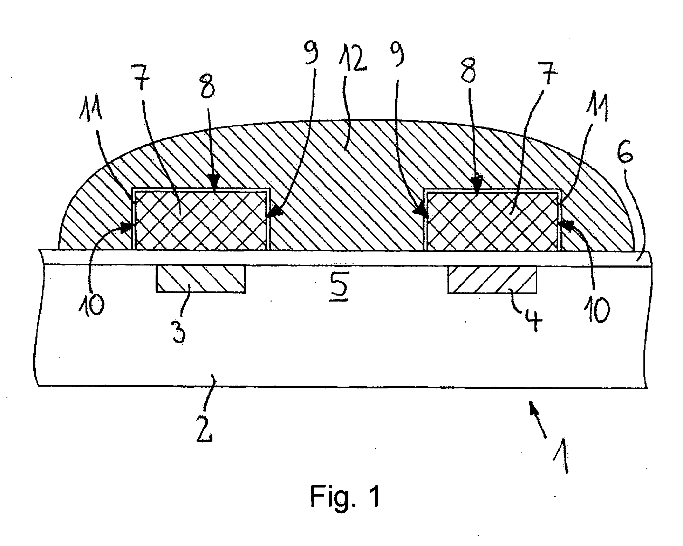

Ein Feuchtesensor hat einen Halbleiterchip 1, der ein Substrat 2 eines ersten Ladungsträgertyps aufweist. In das Substrat 2 ist ein Potentialsensor integriert, der als Feldeffekttransisor ausgestaltet ist. Wie in Fig. 1 erkennbar ist, weist der Potentialsensor eine Drain 3 und eine Source 4 eines zweiten Ladungsträgertyps auf, die als Wannen in das Substrat 2 eingelassen sind. Zwischen der Drain 3 und der Source 4 ist ein Kanalbereich angeordnet, der als Sensorbereich 5 zum Messen einer elektrischen Potentialänderung dient. Auf dem Substrat 2 ist eine elektrische Isolierschicht 6 angeordnet, die sich mit Ausnahme von Stellen, an denen elektrische Anschlusskontakte angeordnet sind, durchgängig über die Drain 3, die Source 4 und den Sensorbereich 5 erstreckt Die Isolierschicht 6 kann beispielsweise eine Oxidschicht sein,

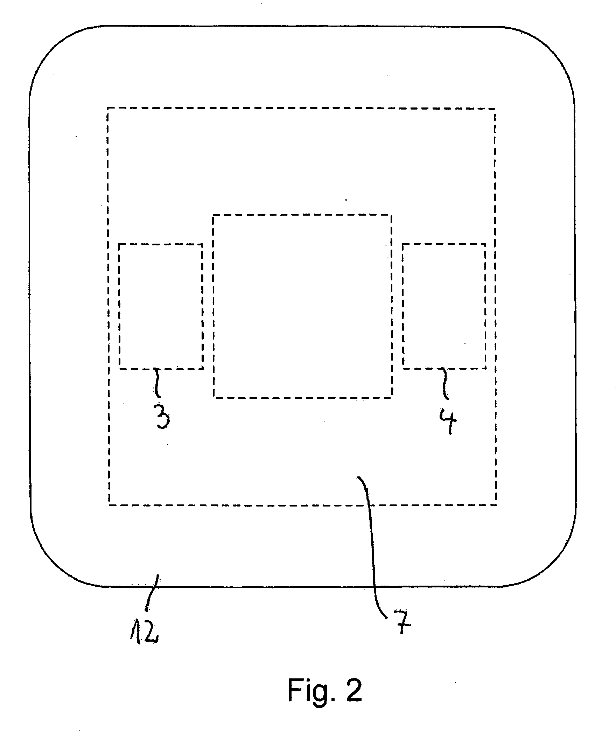

Auf der Isolierschicht 6 ist eine Steuerelektrode 7 aus einem elektrisch leitenden Werkstoff vorgesehen, die in der in Fig. 2 gezeigten Aufsicht auf die Erstreckungsebene des Substrats 2 seitlich neben dem Sensorbereich 5 angeordnet. Deutlich ist erkennbar, dass die Steuerelektrode 7 als Ringelektrode ausgestaltet ist, die den Sensorbereich 5 umgrenzt. Die Steuerelektrode 7 ist an Ihrer dem Substrat 2 abgewandten Oberfläche 8 sowie an Ihrer Innenumtngsfläche 9 und Ihrer Außenumfangsfläche 10 mit einer elektrischen Isolationsschicht 11 beschichtet, die beispielsweise eine native Oxidschicht sein kann.

Über dem Sensorbereich 5 ist auf der Isolierschicht 6 eine feuchtigkeitsdurchlässige Sensorschicht 12 angeordnet ist, deren Dielektrizitätszahl von der Feuchte abhängig ist. Die Sensorschicht 12 besteht bevorzugt aus Polymethylmethacrylat

Die Sensorschicht 12 erstreckt sich unterbrechungsfrei über den von der Steuerelektrode 7 umgrenzten ersten Oberflächenbereich der Isolierschicht 6, über die Steuerelektrode 7 und über einen diese außenseitig umgrenzenden, etwa ringförmlgen zweiten Oberflächenbereich der Isolierschicht 6. In Fig. 1 ist erkennbar, dass die Steuerelektrode 7 an ihrer dem Substrat 2 abgewandten Oberfläche 8 sowie an ihrer Innenumfrangsfläche 9 und ihrer Außenumfangsfläche 10 vollständig von der Sensorschicht 12 abgedeckt wird. Dabei ist die Steuerelektrode 7 über die Isolationsschicht 11 elektrisch gegen die Sensorschicht 12 isoliert

Die Steuerelektrode 7 ist über eine in den Halbleiterchip 1 integrierte Leiterbahn mit einer in der Zeichnung nicht näher dargestellten Signalquelle verbunden. Mit Hilfe der Signalquelle kann zwischen das Substrat 2 und die Steuerelektrode 7 eine veränderliche Steuerspannung angelegt werden, vorzugsweise eine Rechtecksspannung mit vorbestimmter Frequenz und vorbestimmter Amplitude. Die Steuerelektrode 7 ist derart zu der Sensorschicht 12 benachbart, dass sich das von der Steuerspannung erzeugte elektrische Feld durch die Isolationsschicht 11 hindurch bis in die Sensorschicht 12 erstreckt und in dieser befindliche Ladungsträger polarisiert.

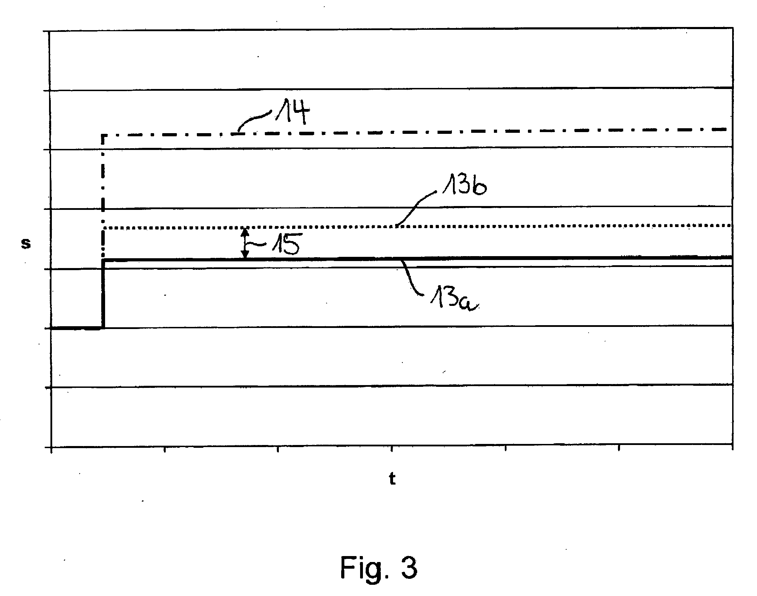

Mit Hilfe des Potentialsensors wird diese, von der Steuerspannung und der Feuchte abhängige Polarisierung kapazitiv In Form eines Potentialmesssignals 13a, 13b gemessen (Fig. 3). Um die Feuchte anhand des Potentialmesssignals 13 zu bestimmen, ist der Potentialsensor mit einer in der Zeichnung nicht näher dargestellten Auswerteeinrichtung verbunden. Diese kann in den Halbleiterchip 1 integriert sein.

In Fig. 3 ist erkennbar, dass nach dem Auftreten einer Sprungstelle in der Steuerspannung auch das Potentialmesssignal 13a, 13b eine entsprechende Sprungstelle aufweist Außerdem ist erkennbar, dass sich das Potentialmesssignal 13a, 13b bei gleich bleibendem Verlauf 14 der Steuerspannung um einen Offset 15 verschiebt, wenn sich die relative Feuchte verändert. Bei einer Zunahme der Feuchte nimmt der Betrag des Potentialmesssignals 13a, 13b zu und bei einer Abnahme der Feuchte nimmt der Betrag des Potentialmesssignals 13a,13b ab.

Für den Offset 15 werden in Abhängigkeit von der relativen Feuchte Referenzwerte bereitgestellt, beispielsweise in Form von Kennlinien oder in Form eines Kennfelds, für das Stützstellen gespeichert sind. Anhand des Potentialmesssignals 13a, 13b und der Referenzwerte kann dann die relative Feuchte bestimmt werden, um beispielsweise ein zu der relativen Feuchte proportionales Analogsignal und/oder ein entsprechendes digitales Signal in der Auswerteeinrichtung zu erzeugen.

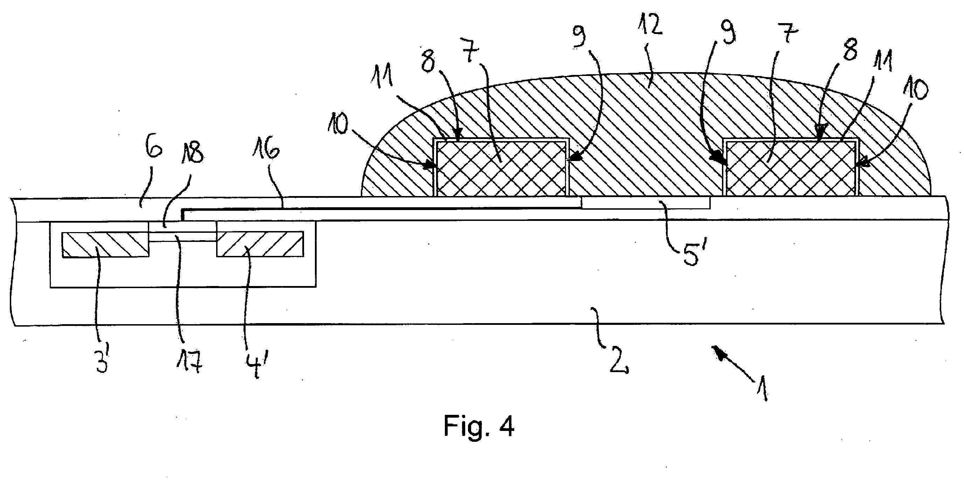

Bei dem in Fig. 4 gezeigten Ausführungsbeispiel ist der Sensorbereich 5' durch eine flächige Messelektrode gebildet, die unterhalb der Sensorschicht 12 mit Abstand zur Steuerelektrode 7 angeordnet und über eine Leiterbahn 16 einer Gateelektrode 18 verbunden ist, die über einem zwischen einer Drain 3' und einer Source 4' befindlichen Kanalbereich 17 eines Feldeffekttransistors angeordnet ist. Deutlich ist erkennbar, dass der Feldeffekttransistor seitlich neben der aus dem Sensorberelch 5', der Steuerelektrode 7, der Isolationsschicht 11 und der Sensorschicht 12 gebildeten Anordnung in das Substrat 2 des Halbleiterchips 1 integriert ist.

## Patentansprüche

1. Feuchtesensor, der auf einem Substrat (2) mindestens einen, einen Sensorbereich (5, 5') aufweisenden Potentialsensor und wenigsten eine Steuerelektrode (7) hat, die mit einer Signalquelle verbunden ist, die derart ausgestaltet ist, dass eine veränderliche Steuerspannung an die Steuerelektrode (7) anlegbar ist, wobei auf dem Sensorbereich (5, 5') eine feuchtigkeitsdurchlässige Sensorschicht (12) angeordnet ist, deren Dielektrizitätszahl von der Feuchte abhängig ist, wobei die Steuerelektrode (7) derart zu der Sensorschicht (12) benachbart ist, dass das Potentialmesssignal des Potentialsensors von der Steuerspannung und der Feuchte abhängig ist, und wobei der Potentialsensor mit einer Auswerteeinrichtung zum Ermitteln der Feuchte aufgrund des Potentialmesssignals verbunden ist,
**dadurch gekennzeichnet, dass**
die Steuerelektrode (7) in der Aufsicht auf die Erstreckungsebene des Substrats (2) seitlich neben dem Sensorbereich (5) angeordnet ist, und
die Sensorschicht (12) die Steuerelektrode (7) vollständig abdeckt.

2. Feuchtesensor nach Anspruch 1, **dadurch gekennzeichnet, dass** die Steuerelektrode (7) den Sensorbereich ringförmig umgrenzt.

3. Feuchtesensor nach Anspruch 1 oder 2, **dadurch gekennzeichnet, dass** die Sensorschicht (12) unterbrechungsfrei über den von der Steuerelektrode (7) umgrenzten ersten Oberflächenbereich der Isolierschicht (6) erstreckt.

4. Feuchtesensor nach einem der Ansprüche 1 bis 3, **dadurch gekennzeichnet, dass** zwischen der Steuerelektrode (7) und der Sensorschicht (12) eine elektrische Isolationsschicht (11) angeordnet ist.

5. Feuchtesensor nach einem der Ansprüche 1 bis 4, **dadurch gekennzeichnet, dass** Sensorschicht (12) aus Polymethylmethacrylat besteht oder Polymethylmethacrylat enthält,

6. Feuchtesensor nach einem der Ansprüche 1 bis 5, **dadurch gekennzeichnet, dass** der Potentialsensor ein Feldeffekttransistor ist, der ein Halbleiter-Substrat (2) eines ersten Ladungsträgertyps aufweist, auf dem eine Drain (3) und eine Source (4) eines zweiten Ladungsträgertyps angeordnet sind, und dass zwischen Drain und Source ein Kanalbereich vorgesehen ist, der den Sensorbereich (5) bildet.

7. Feuchtesensor nach einem der Ansprüche 1 bis 6, **dadurch gekennzeichnet, dass** der Sensorbereich (5') durch eine vorzugsweise flächige Messelektrode gebildet ist, die über eine Leiterbahn (16) mit der Gateelektrode (18) eines Feldeffekttransistors und/oder einem Eingang eines hochohmigen Messverstärkers verbunden ist.

8. Feuchtesensor nach einem der Ansprüche 1 bis 7, **dadurch gekennzeichnet, dass** die Signalquelle derart ausgestaltet ist, dass sie eine Steuerspannung mit mindestens einer Sprungstelle, insbesondere eine Rechteckspannung erzeugen kann.

9. Feuchtesensor nach einem der Ansprüche 1 bis 8, **dadurch gekennzeichnet, dass** die Signalquelle und die Auswerteeinrichtung in das Substrat (2) integriert sind.

10. Feuchtesensor nach einem der Ansprüche 1 bis 9, **dadurch gekennzeichnet, dass** die Sensorschicht (12) auf dem Sensorbereich (5, 5') eine größerer Höhe als die die Steuerelektrode (7) aufweist.

11. Feuchtesensor nach einem der Ansprüche 1 bis 10, **dadurch gekennzeichnet, dass** die Sensorschicht (12) einen außenseitig der Steuerelektrode (7) umgrenzenden, etwa ringförmig zweiten Oberflächenbereich der Isolierschicht (6) überdeckt.

## Claims

1. Moisture sensor, which has on a substrate (2) at least one potential sensor having a sensor region (5, 5'), and at least one control electrode (7), which is connected with a signal source, designed so that a variable control volt can be applied to the control electrode (7), wherein a moisture-permeable sensor layer (12), the dielectric constant of which is dependent on the moisture, is arranged on the sensor region (5, 5'), wherein the control electrode (7) is adjacent to the sensor layer (12) in such a manner that the potential measurement signal of the potential sensor is dependent on the control voltage and the moisture and wherein the potential sensor is connected with an evaluating device for determining the moisture on the basis of the potential measurement signal, **characterised in that** the control electrode (7) in plan view is arranged on the major plane of the substrate (2) laterally adjacent to the sensor region (5) and the sensor layer (12) completely covers the control electrode (7).

2. Moisture sensor according to claim 1, **characterised in that** the control electrode (7) annularly bounds the sensor region.

3. Moisture sensor according to claim 1 or 2, **characterised in that** the sensor layer (12) extends uninterruptedly over the first surface region of the insulating layer (6) bounded by the control electrode (7).

4. Moisture sensor according to any one of claims 1 to 3, **characterised in that** an electrical insulating layer (11) is arranged between the control electrode (7) and the sensor layer (12).

5. Moisture sensor according to any one of claims 1 to 4, **characterised in that** the sensor layer (12) consists of polymethylmethacrylate or contains polymethylmethacrylate.

6. Moisture sensor according to any one of claims 1 to 5, **characterised in that** the potential sensor is a field effect transistor, which comprises a semiconductor substrate (2) of a first charge carrier type, on which a drain (3) and a source (4) of a second charge carrier type are arranged, and that a channel region forming the sensor region (5) is provided between the drain and source.

7. Moisture sensor according to any one of claims 1 to 6, **characterised in that** the sensor region (5') is formed by a preferably areal measuring electrode, which is connected by way of a conductor track (16) with the gate electrode (18) of a field effect transistor and/or an input of a high-impedence measuring amplifier.

8. Moisture sensor according to any one of claims 1 to 7, **characterised in that** the signal source is designed so that it can generate a control voltage with at least one point of discontinuity, particularly a square-wave voltage.

9. Moisture sensor according to any one of claims 1 to 8, **characterised in that** the signal source and the evaluating device are integrated in the substrate (2).

10. Moisture sensor according to any one of claims 1 to 9, **characterised in that** the sensor layer (12) has on the sensor region (5, 5') a greater height than the control electrode (7).

11. Moisture sensor according to any one of claims 1 to 10, **characterised in that** the sensor layer (12) covers an approximately annular second surface region of the insulating layer (6) bounding the control electrode (7) at the outer side.

## Revendications

1. Capteur d'humidité, qui comporte sur un substrat (2) au moins un capteur de potentiel présentant une zone de capteur (5, 5') et au moins une électrode de commande (7), qui est reliée à une source de signal qui est configurée de telle manière qu'une tension de commande variable puisse être appliquée à l'électrode de commande (7), une couche de capteur (12) perméable à l'humidité étant agencée sur la zone de capteur (5, 5'), dont la constante diélectrique dépend de l'humidité, l'électrode de commande (7) étant proche de la couche de capteur (12) de telle manière que le signal de mesure de potentiel du capteur de potentiel dépende de la tension de commande et de l'humidité, et le capteur de potentiel étant relié à un dispositif d'analyse pour déterminer l'humidité sur la base du signal de mesure de potentiel, **caractérisé en ce que** l'électrode de commande (7) est disposée, selon une vue en élévation sur le plan d'extension du substrat (2), latéralement à côté de la zone de capteur (5), et la couche de capteur (12) recouvre entièrement l'électrode de commande (7).

2. Capteur d'humidité selon la revendication 1, **caractérisé en ce que** l'électrode de commande (7) entoure en forme d'anneau la zone de capteur.

3. Capteur d'humidité selon la revendication 1 ou 2, **caractérisé en ce que** la couche de capteur (12) s'étend sans interruption sur la première zone de surface de la couche isolante (6) entourée par l'électrode de commande (7).

4. Capteur d'humidité selon l'une quelconque des revendications 1 à 3, **caractérisé en ce qu'**une couche d'isolation électrique (11) est disposée entre l'électrode de commande (7) et la couche de capteur (12).

5. Capteur d'humidité selon l'une quelconque des revendications 1 à 4, **caractérisé en ce que** la couche de capteur (12) se compose de polyméthylméthacrylate ou contient du polyméthylméthacrylate.

6. Capteur d'humidité selon l'une quelconque des revendications 1 à 5, **caractérisé en ce que** le capteur de potentiel est un transistor à effet de champ, qui présente un substrat semi-conducteur (2) d'un premier type de porteurs de charge, sur lequel sont disposés un drain (3) et une source (4) d'un deuxième type de porteurs de charge, et **en ce qu'**il est prévu entre le drain et la source une zone de canal, qui forme la zone de capteur (5).

7. Capteur d'humidité selon l'une quelconque des revendications 1 à 6, **caractérisé en ce que** la zone de capteur (5') est formée par une électrode de mesure de préférence plate, qui est reliée par une piste conductrice (16) à l'électrode de grille (18) d'un transistor à effet de champ et/ou à une entrée d'un amplificateur de mesure à haute résistance ohmique.

8. Capteur d'humidité selon l'une quelconque des revendications 1 à 7, **caractérisé en ce que** la source de signal est configurée de telle manière qu'elle puisse produire une tension de commande avec au moins un point de saut, en particulier une tension rectangulaire.

9. Capteur d'humidité selon l'une quelconque des revendications 1 à 8, **caractérisé en ce que** la source de signal et le dispositif d'analyse sont intégrés dans le substrat (2).

10. Capteur d'humidité selon l'une quelconque des revendications 1 à 9, **caractérisé en ce que** la couche de capteur (12) présente sur la zone de capteur (5, 5') une hauteur plus grande que l'électrode de commande (7).

11. Capteur d'humidité selon l'une quelconque des revendications 1 à 10, **caractérisé en ce que** la couche de capteur (12) recouvre une deuxième zone de surface sensiblement annulaire de la couche isolante (6), qui entoure l'électrode de commande (7) sur le côté extérieur.
